# EUROPEAN PATENT SPECIFICATION

(11) **EP 3 164 006 B1**
(45) Date of publication and mention of the grant of the patent: **03.10.2018**
(21) Application number: 14736378.2
(22) Date of filing: 03.07.2014
(51) Int. Cl.: A21C 1/06, A21C 1/14, B01F 7/00, A47J 43/07

(54) **HOUSEHOLD APPLIANCE MIXING ARRANGEMENT**
MISCHANORDNUNG FÜR HAUSHALTSGERÄTE
DISPOSITIF DE MÉLANGE D'APPAREIL ÉLECTROMÉNAGER

(43) Date of publication of application: 10.05.2017
(73) Proprietor: Aktiebolaget Electrolux, 105 45 Stockholm (SE)
(72) Inventor: ROJAS RESTREPO, Monica Maria, S-105 45 Stockholm (SE); KWARNMARK, Martin, S-105 45 Stockholm (SE)
(74) Representative: Electrolux Group Patents
(86) International application number: PCT/EP2014/064205
(87) International publication number: WO 2016/000779

(56) References cited:
- WO-A1-2006/113446
- FR-A1- 2 885 490
- US-A- 743 090

## Description

### TECHNICAL FIELD

Embodiments herein relate to a household appliance mixing arrangement.

### BACKGROUND

A household appliance mixing arrangement for mixing and/or blending foodstuff commonly comprises a mixing container and a hook which is rotatable in the mixing container. The household appliance mixing arrangement may also comprise a base unit, a drive arrangement and an electric motor. The base unit often forms a support for the mixing container and the electric motor is arranged to rotate the hook via the drive arrangement. Such appliances may be referred to under different names such as food mixer, stand mixer, mixer, food processor or kitchen machine.

Hooks of household appliance mixing arrangements are typically vertically arranged, such that the hook rotates around a vertical rotation axis directed towards a bottom portion of the mixing container, describing a planetary motion. The hook is, in an upper end, attached to the drive arrangement which in turn is arranged above both the hook and the mixing container.

The design of the hook may depend on the type of foodstuff which is to be mixed. Hooks for mixing foodstuff with a lower viscosity or internal friction may not be suitable for foodstuff with higher viscosity and vice versa. Some foodstuff, such as a dough, needs to be thoroughly mixed and kneaded such that ingredients are finely integrated and gluten strands are developed.

In US5758963A a food mixer and a hook are disclosed which aim at both reducing a load on a drive arrangement and minimizing the amount of time required for the mixing process. The hook and food mixer described in US5758963A are hence optimized for other aspects than the process of mixing and kneading ingredients. Due to the shape of the hook, dough may climb along the hook towards the drive arrangement. In addition, the point of gravity for the mixer is relatively high, whereby the mixer may be unstable. The hook and food mixer described in US5758963A may be suitable for some applications, but a stable household appliance mixing arrangement which further improves mixing and/or gluten development and/or an alternative household appliance mixing arrangement is still desirable.

US743090A, which discloses the preamble of claim 1, discloses a manually operated apparatus for mixing and kneading dough. A kneading blade is arranged in a receptacle for holding a dough. The blade is formed with a rectangular portion and with a flat spirally-arranged portion and constitutes as a whole a helix.

FR2885490A1 discloses a device for kneading, fermenting and producing sourdough. The dough is held in a swing tank provided with a horizontally driven arm and a helicoidal counter-arm which is driven by a dough mixture flow.

WO2006113446A1 discloses a system for continuous production of baked bread including an ingredient metering unit, a dough mixing unit, a dough transport unit and an oven unit. The dough mixing unit comprises a mixing element including a helically shaped mixing and kneading blade (most clearly shown in Figure 6). The mixing and kneading blade includes a first prong and a second prong, i.e. two arms.

Accordingly, there remains a need for an improved and/or an alternative household appliance mixing arrangement.

### SUMMARY

The household appliance mixing arrangement as set out herein eliminates or at least reduces the problems and/or drawbacks associated with previously known household appliance mixing arrangement.
According to a first aspect, this is provided by a household appliance mixing arrangement according to claim 1 comprising a mixing container and a hook with a proximal end, a distal end and a curved elongated portion extending between the proximal end and the distal end, the proximal end comprising an attachment portion which is attachable to a drive arrangement via a through hole in a first inner surface portion of the mixing container such that the hook is rotatable around an axis of rotation within the mixing container, wherein the hook is configured such that when it is attached to the drive arrangement and in its lowest position, the curved elongated portion at its proximal end extends in a first direction, being downwards from the axis of rotation, substantially in parallel with the first inner surface portion of the mixing container, and at least a part of the curved elongated portion extends in a second direction, forming an angle α with a first plane defined by the first direction and the axis of rotation.
Since the curved elongated portion at its proximal end extends in a first direction, being downwards from the axis of rotation, substantially in parallel with the first inner surface portion of the mixing container, and at least a part of the curved elongated portion extends in a second direction, forming an angle α with a first plane defined by the first direction and the axis of rotation, the hook will thoroughly mix and knead the foodstuff along the elongated portion. Due to the angle α, also referred to as an attack angle α, foodstuff such as dough or other high-viscosity foodstuff will be kneaded along the elongated portion in a direction towards the distal end. The angle α between the second direction and the first plane combined with the curved elongated shape of the hook significantly improves the mixing and the kneading of the foodstuff in the mixing container compared with prior art mixing arrangements. Hereby a stronger gluten network is achieved.

The axis of rotation is substantially horizontal, and the first direction is substantially perpendicular to the axis of rotation.

Since the axis of rotation is substantially horizontal, and the first direction is substantially perpendicular to the axis of rotation, foodstuff within the mixing container may be efficiently mixed and kneaded. In addition, with a substantially horizontal axis of rotation and a substantially vertical first direction, the household appliance mixing arrangement is very steady, in particular since the substantially horizontal axis of rotation allows a lower point of gravity than with e.g. a vertical axis of rotation.
The angle α may be positive in the rotational direction of the hook.
Since the angle α may be positive in the rotational direction of the hook, the foodstuff in the mixing container will be kneaded and mixed along a major part of the hook as the hook is rotated.
The angle α, when projected on a second, substantially horizontally arranged plane, may be in the range of 10-60 degrees, preferably 20-50 degrees, more preferably 30-40 degrees.
Since the angle α, when projected on a second, substantially horizontally arranged plane, is in the range of 10-60 degrees, preferably 20-50 degrees, more preferably 30-40 degrees, foodstuff within the mixing container may be efficiently mixed and kneaded.
A curvature of the curved elongated portion, when the hook is in its lowest position, may substantially follow a curvature of the inner surface of the mixing container along at least 50%, preferably at least 70%, of is length.

Since a curvature of the curved elongated portion, when the hook is in its lowest position, substantially follows a curvature of the inner surface of the mixing container along at least 50%, preferably at least 70%, of is length, the foodstuff will be pressed into a gap between the hook and the mixing container when the hook is rotated, whereby both mixing and kneading is improved.

At least 40%, preferably at least 50%, more preferably at least 60% of the mixing container inner surface may have the shape of an oblate spheroid.

Since at least 40%, preferably at least 50%, more preferably at least 60% of the mixing container inner surface has the shape of an oblate spheroid, the shape of the inner surface co-operates in a favorable manner with the shape of the hook when the hook is rotated in the mixing container such that integration of ingredients in the mixing container is enhanced.

A minor axis of the at least partly oblate spheroid may substantially coincide with the rotation axis of the hook.

Since a minor axis of the at least partly oblate spheroid substantially coincides with the rotation axis of the hook, the household appliance mixing arrangement is both steady and compact. With the minor axis substantially coinciding with the rotation axis of the hook, a width of the household appliance mixing arrangement along the axis of rotation is relatively short.

The minor axis of the at least partly oblate spheroid may extend between a substantially flat first inner surface portion, extending substantially perpendicular to the axis of rotation, and an oppositely arranged second inner surface portion.

Since the minor axis of the at least partly oblate spheroid extends between a substantially flat first inner surface portion, extending substantially perpendicular to the axis of rotation, and an oppositely arranged second inner surface portion, the household appliance mixing arrangement is both compact and stable. The flat first inner surface portion allows the hook to be shorter along the axis of rotation than a length of a hook along the rotation axis in a half-spherical-shaped mixing container with equal radiuses in all horizontal directions. Hereby the construction is very rigid.

The second inner surface portion may be substantially flat, and further arranged substantially in parallel to the first substantially flat surface portion.

Since the second inner surface portion is substantially flat, and further arranged substantially in parallel to the first substantially flat surface portion the household appliance mixing arrangement is both compact and stable. The flat first and second inner surface portions allow the hook to be shorter along the axis of rotation than a length of a hook along the rotation axis in a half-spherical-shaped mixing container. Hereby the construction of the hook is very rigid.

The second inner surface portion may comprise a protuberance directed towards the first substantially flat inner surface portion.

Since the second inner surface portion comprises a protuberance directed towards the first substantially flat inner surface portion, foodstuff mixed within the mixing container will not stick to the mixing container inner surface. Further, due to the protuberance, foodstuff in the mixing container may be mixed and kneaded during a larger part of each rotation cycle. Moreover, the protuberance in combination with the hook facilitates releasing dough from the hook. Hereby the dough is allowed to return to another portion of the hook in a subsequent hook rotation cycle, whereby both mixing and kneading are enhanced.

The protuberance may be directed substantially along the axis of rotation, towards the attachment portion of the hook.

Since the protuberance is directed substantially along the axis of rotation, towards the attachment portion of the hook, foodstuff mixed within the mixing container will not stick to the mixing container inner surface.

The distal end of the curved elongated portion may be directed in a third direction. The third direction, when projected on the second, substantially horizontally arranged plane, forms an angle β with the second direction.
Since the distal end of the curved elongated portion is directed in a third direction, and in that the third direction, when projected on the second, substantially horizontally arranged plane, forms an angle β with the second direction, foodstuff will follow the third direction and be released from the hook at distance from the elongated portion extending in the second direction. The foodstuff will then be engaged to the hook in the next rotation-cycle. Hereby both mixing and kneading are improved. The angle β is larger than 0 degrees, and may for example be in the range of 5-50 degrees.

The hook, when rotated, forms an oblate spheroid-shaped solid of revolution which substantially corresponds to a part of the inner surface of the mixing container.
Since the hook, when rotated, forms an oblate spheroid-shaped solid of revolution which substantially corresponds to a part of the inner surface of the mixing container the hook is both rigid and co-operates with the inner surface in the mixing and/or kneading of the foodstuff.
The shape of the protuberance may be adapted to co-operate with the solid of revolution of the hook.
Since the shape of the protuberance is adapted to co-operate with the solid of revolution of the hook, both the hook and the mixing container inner surface prevent foodstuff from sticking to parts of the inner surface which is not accessible for the rotating hook.
At least 40%, preferably at least 50%, more preferably at least 60% of the mixing container inner surface may have the shape of a cylinder with a cylinder axis substantially in parallel with the axis of rotation. A curvature of the curved elongated portion, when the hook is in its lowest position, substantially follows a curvature of the inner surface of the mixing container along at least 50%, preferably at least 70%, of is length.

Since at least 40%, preferably at least 50%, more preferably at least 60% of the mixing container inner surface has the shape of a cylinder with a cylinder axis substantially in parallel with the axis of rotation, and that a curvature of the curved elongated portion, when the hook is in its lowest position, substantially follows a curvature of the inner surface of the mixing container along at least 50%, preferably at least 70%, of is length both mixing and kneading of foodstuff is enhanced.

Thus, hereby is provided an alternative household appliance mixing arrangement and/or a household appliance mixing arrangement eliminating or at least reducing the problems and/or drawbacks associated with prior art household mixing appliances.

### BRIEF DESCRIPTION OF THE DRAWINGS

The various aspects of embodiments herein, including its particular features and advantages, will be readily understood from the following detailed description and the accompanying drawings, in which:
Fig. 1 illustrates a household appliance mixing arrangement according to some embodiments from above.
Fig. 2 illustrates a cross-section of the household appliance mixing arrangement of Fig. 1.
Fig. 3 illustrates the household appliance mixing arrangement of Fig. 1 in perspective.
Fig. 4 illustrates a household appliance mixing arrangement according to another embodiment in perspective.
Figs. 5a-5i illustrate a rotation cycle of the household appliance mixing arrangement according to Fig. 1 from above.

### DETAILED DESCRIPTION

Embodiments herein will now be described more fully with reference to the accompanying drawings. Like numbers refer to like elements throughout.

Well-known functions or constructions will not necessarily be described in detail for brevity and/or clarity.

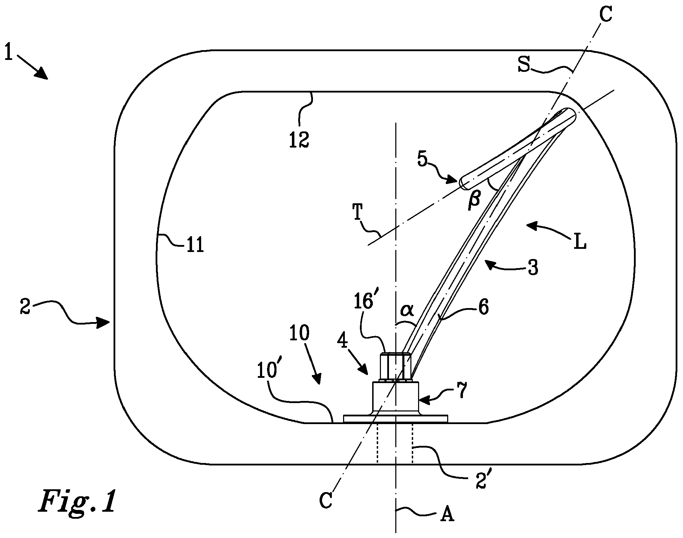

**Fig. 1** illustrates a household appliance mixing arrangement **1** with a mixing container **2** and a hook **3**. The mixing container 2 is a bowl-shaped open top mixing container, in Fig. 1 depicted from above. The mixing container 2 can be made of any durable material, such as plastics, metal and/or glass and the hook 3 may be made e.g. of metal and/or plastics.

The hook 3 has a proximal end **4**, a distal end **5** and a curved elongated portion **6** extending between the proximal end 4 and the distal end 5. The proximal end 4 comprises an attachment portion **7** which is attachable towards a first inner surface portion **10** of the mixing container 2. The hook 3 is rotatable around an axis of rotation **A** within the mixing container 2.

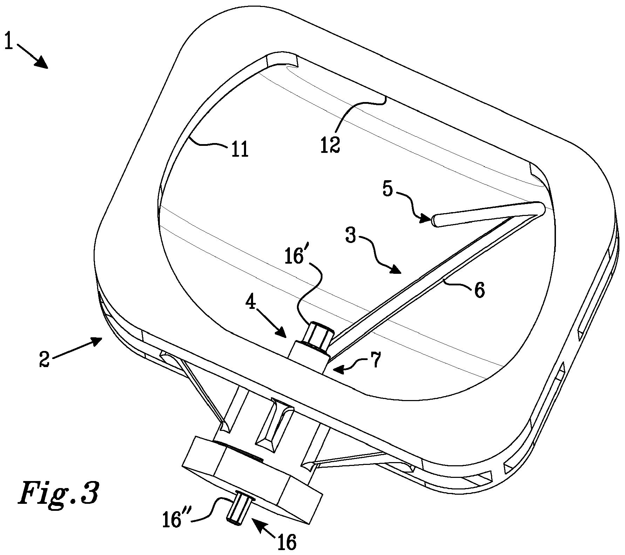

The attachment portion 7 of the hook 3 is also attachable to a drive arrangement or a part thereof such as an axle shaft **16**. In the Fig. 1 embodiment the attachment portion 7 is attached to a first axle shaft portion **16'**. The axle shaft 16 extends through a through hole **2'** of the mixer container 2 such that the first axle shaft portion 16' is arranged within the mixing container 2, and a second axle shaft portion is arranged outside of the mixing container 2. The second axle shaft portion is illustrated in Fig. 3. An electrical motor can bring the second axle shaft portion to rotate, whereby the first axle shaft portion 16' and the hook 3 within the mixing container 2 rotates.

The hook 3 is thus in the Fig. 1 embodiment rotatably attachable towards the first inner surface portion 10 such that the hook 3 with its attachment portion 7 are allowed to rotate relatively the first inner surface portion 10 of the mixing container 2 when the hook 3 is driven by the drive arrangement. At least a portion of the attachment portion 7 abuts the first inner surface portion 10 and seals off the through hole 2' such that ingredients are prevented from escaping the mixing container 2 via the through hole 2'.

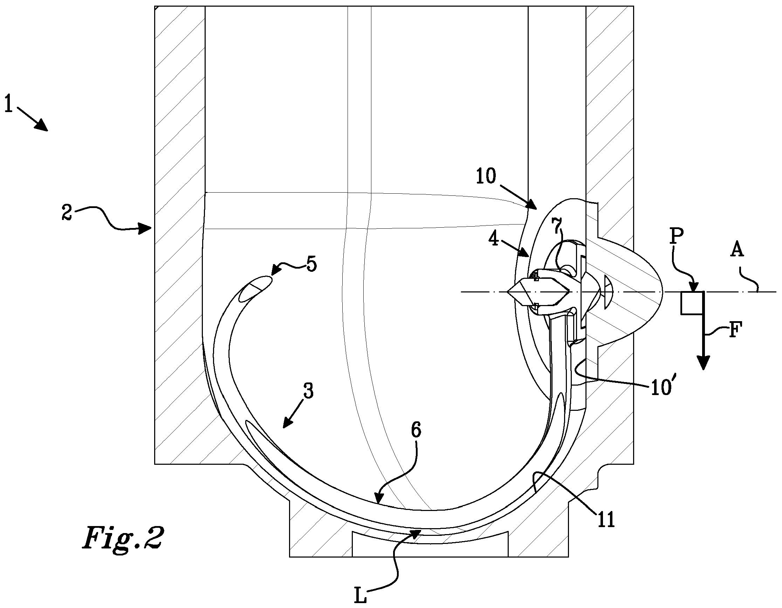

In Fig. 1 the hook 3 is illustrated in its lowest position **L**. The hook 3 is in the lowest position L when the centre of gravity of the hook 3 is as low as possible within the mixing container 2. The lowest position L is also illustrated in Fig. 2.

The curved elongated portion 6 extends in a first direction at its proximal end 4. The first direction, illustrated in Fig. 2, is downwards from the axis of rotation A, substantially in parallel with the first inner surface portion 10 of the mixing container 2. In the embodiment illustrated in Fig 1, the axis of rotation A is substantially horizontally arranged.

At least a part of the curved elongated portion 6 further extends in a second direction **S**. The second direction S forms an angle **α** with a first plane which is defined by the first direction F and the axis of rotation A. The first plane is illustrated in Fig. 2. The angle α is positive in the rotational direction of the hook i.e., counter-clockwise seeing along the axis of rotation from the attachment portion 7. The angle α, when projected on a second, substantially horizontally arranged plane, is in the range of 10-60 degrees, preferably 20-50 degrees, more preferably 30-40 degrees.

In Fig. 1 also an inner surface **11** of the mixing container 2 is illustrated. The inner surface 11 is the surface of the mixing container 2 which faces the hook 3. In the Fig. 1 embodiment, at least 40%, preferably at least 50%, more preferably at least 60% of the mixing container inner surface 11 has the shape of an oblate spheroid. An upper portion of the inner surface 11 may be substantially vertical.

The shape of an oblate spheroid may be referred to as a rotationally symmetric ellipsoid with a minor axis shorter than a major axis. According to some embodiments, as is illustrated in Fig. 1-5, the minor axis of the at least partly oblate spheroid substantially coincides with the rotation axis A of the hook 3. A lower portion of the mixing container inner surface 11 may be shaped as an oblate spheroid, while an upper part is open. A user may pour/place foodstuff into the mixing container through the open top.

The minor axis of the at least partly oblate spheroid extends between a substantially flat first inner surface portion **10'** and an oppositely arranged second inner surface portion **12**. The substantially flat first inner surface portion 10' extends substantially perpendicular to the axis of rotation A. The second inner surface portion 12 is substantially flat and arranged substantially in parallel to the first substantially flat surface portion 10'. The first inner surface portions 10, 10' and 12 are parts of the mixing container inner surface 11.

As illustrated in Fig. 1, the hook 3 has a substantially horizontal rotation axis A and the mixing container 3 is an open top mixing container. Since the hook 3 extends into the mixing container via a through hole in a side wall portion of the mixing container 2, a user that would like to add ingredients, e.g. during baking, mixing and/or kneading, may easily do so since no drive arrangements or other parts of the household appliance mixing arrangement 1 obstruct the mixer container opening. The hook 3 rotates near the inner surface 11 of the mixing container such that the ingredients are pressed, kneaded and well-mixed between the hook 3 and the inner surface 11 when the hook 3 is rotated. The curved elongated shape of the hook, with the angle α, has proven to be exceptionally efficient for catching and bringing the foodstuff to be mixed and kneaded over the length of the hook 3.

Section **C-C** in Fig. 1 illustrates a cross-section, further discussed in Fig. 2.

As mentioned, **Fig. 2** illustrates the cross-section of the household appliance mixing arrangement 1 along section C-C, illustrated in Fig. 1. Also in Fig. 2, the hook 3 is attached towards the first inner surface portion 10, 10' of the mixing container 2. The hook 3 is illustrated in its lowest position L, and a first direction F, being downwards from the axis of rotation A is also illustrated. In the Fig. 2 illustrated embodiment, the first direction is substantially vertical. A plane **P** is defined through the axis of rotation A and the first direction F. The plane P may be referred to as a vertical symmetry plane for the mixing container 2 along the minor axis. Thus, both the proximal end 4 of hook 3 and the first inner surface 10, 10' of the mixing container 2 are arranged substantially vertically and in parallel to each other.

A curvature of the curved elongated portion 6 substantially follows a curvature of the inner surface 11 of the mixing container 2 along at least 50%, preferably at least 70%, of is length. As illustrated, the curved elongated portion 6 follows the curvature of the inner surface 11 until the distal end 5 turns away from the inner surface. Hereby foodstuff which is kneaded along the length of the curved elongated portion 6 can be released from the hook 3 during a first rotation cycle of the hook 3 and is ready to be further kneaded in a subsequent cycle of rotation.

The attachment portion 7 at the proximal end 4 may be integrated as one unit with the curved elongated portion 6 or may be a separate part which is attachable to the curved elongated portion 6 such that they together form the hook 3.

**Fig. 3** illustrates a perspective view from above of the household appliance mixing arrangement 1. The proximal end 4 of the hook 3 is attached towards the mixing container 2 and to the axle shaft 16 via the attachment arrangement 7. The curved elongated portion 6 extends along the inner surface 11 towards the distal end 5. In Fig. 3 also the second inner surface portion 12 is illustrated. In the Fig. 3 embodiment the second inner surface portion 12 is substantially flat, and further arranged substantially in parallel to the first substantially flat surface portion to which the hook 3 is attached.

In Fig. 3 the axle shaft 16 is illustrated. The axle shaft 16 is part of a drive arrangement and extends through a through hole of the mixer container 2 such that the first axle shaft portion 16' is arranged within the mixing container 2 and the second axle shaft portion **16"** is arranged outside of the mixing container 2.

A rotational movement from an electric motor can be transferred to the second axle shaft portion 16" such that the axle shaft 16 and the hook 3 is brought to rotate.

The attachment arrangement 7 is attached to the axle shaft 16 e.g. via a locking pin, threads or similar. In the Fig. 3 embodiment the attachment arrangement 7 is thread onto the axle shaft 16 and locked axially. The attachment arrangement 7 is pressed towards the inner surface of the mixing container 2 such that the hook 3 is allowed to rotate but not allowed to move along the axis of rotation.

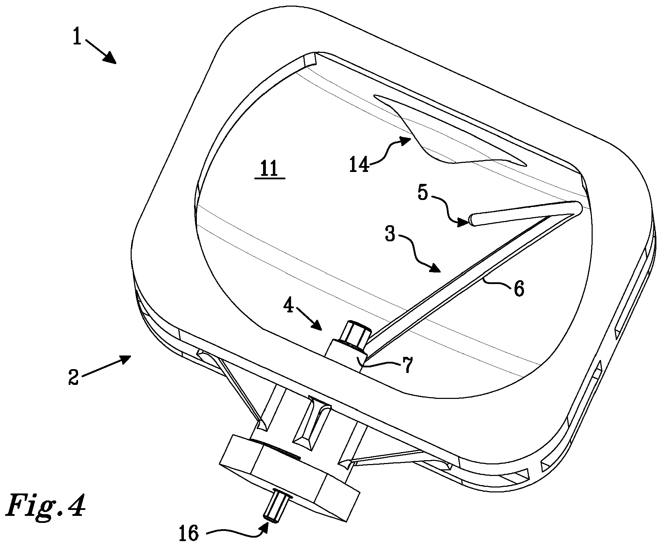

**Fig. 4** generally corresponds to Fig. 3, and illustrates a household appliance mixing arrangement 1 according to another embodiment. The curved elongated portion 6 extends along the inner surface 11 towards the distal end 5. In the Fig. 4 embodiment the second inner surface portion 12 comprises a protuberance **14**. The protuberance 14 may be directed substantially along the axis of rotation, towards the attachment portion 7 of the hook 3.

When the hook 3 is rotated, it forms a substantially oblate spheroid-shaped solid of revolution. The substantially oblate spheroid-shaped solid of revolution at least partly corresponds to the inner surface 11 of the mixing container 2. The shape of the protuberance 14 is adapted to co-operate with the solid of revolution of the hook 3 such that both the protuberance 14 and the part of the solid of revolution which faces the protuberance 14 are bulging into the oblate spheroid-shape.

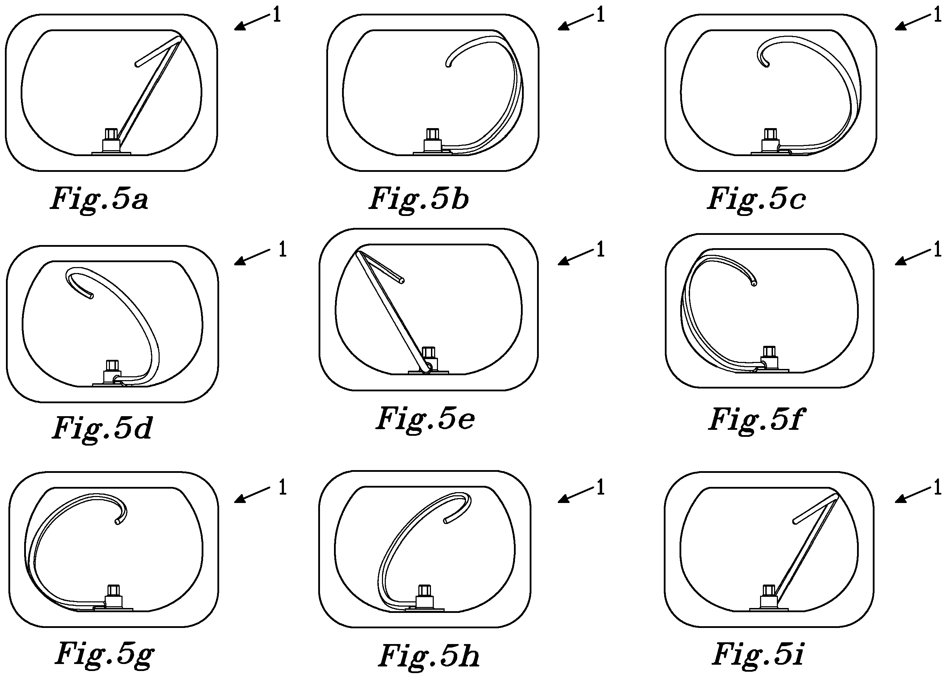

In Figs. **5a-5i** a rotation cycle of the hook within the mixing container of the household appliance mixing arrangement 1 of Figs. 1-3 is illustrated. Fig. 5a generally corresponds to Fig. 1, illustrating the hook in the lowest position. Fig. 5b illustrates the hook rotated 45 degrees counter-clockwise from the lowest position, as seen along the axis of rotation from the attachment portion. Fig. 5c illustrates the hook rotated 90 degrees counter-clockwise, as seen along the axis of rotation from the attachment portion. Fig. 5d illustrates the hook rotated 135 degrees and Fig. 5e illustrates the hook rotated 180 degrees, i.e. in a highest position. Fig. 5f illustrates the hook rotated 225 degrees from the lowest position, Fig. 5g illustrates the hook rotated 270 degrees and Fig. 5h illustrates the hook rotated 315 degrees. In Fig. 5i, the hook, after a complete cycle of rotation, is arranged in its lowest position again and is thus in the same position as in Fig. 5a.

Although the aspects has been described with reference to example embodiments, many different alterations, modifications and the like will become apparent for those skilled in the art. According to some embodiments the household appliance mixing arrangement 1 also comprises the drive arrangement and/or the axle shaft 16.

## Claims

1. A household appliance mixing arrangement (1) comprising a mixing container (2) and a hook (3) with a proximal end (4), a distal end (5) and a curved elongated portion (6) extending between the proximal end (4) and the distal end (5), the proximal end (4) comprising an attachment portion (7) which is attachable to a drive arrangement (16) via a through hole (2') in a first inner surface portion (10) of the mixing container (2) such that the hook (3) is rotatable around a substantially horizontal axis of rotation (A) within the mixing container (2),
the hook (3) is configured such that when it is attached to the drive arrangement (16) and in its lowest position (L), the curved elongated portion (6) at its proximal end (4) extends in a first direction (F), being downwards from the substantially horizontal axis of rotation (A) and substantially perpendicular thereto, substantially in parallel with the first inner surface portion (10) of the mixing container (2), and at least a part of the curved elongated portion (6) extends in a second direction (S), forming an angle (α) with a first plane (P) defined by the first direction (F) and the substantially horizontal axis of rotation (A), **characterized in that** the hook (3), when rotated, forms an oblate spheroid-shaped solid of revolution which substantially corresponds to a part of the inner surface (11) of the mixing container (2).

2. The arrangement (1) according to claim 1, wherein the angle (α) is positive in the rotational direction of the hook.

3. The arrangement (1) according to claim 1, wherein the angle (α), when projected on a second, substantially horizontally arranged plane, is in the range of 10-60 degrees, preferably 20-50 degrees, more preferably 30-40 degrees.

4. The arrangement (1) according to any one of the preceding claims, wherein a curvature of the curved elongated portion (6), when the hook is in its lowest position (L), substantially follows a curvature of an inner surface (11) of the mixing container (2) along at least 50%, preferably at least 70%, of a length of the curved elongated portion (6).

5. The arrangement (1) according to any one of claim 1-4, wherein at least 40%, preferably at least 50%, more preferably at least 60% of the mixing container inner surface (11) has the shape of a cylinder with a cylinder axis substantially in parallel with the axis of rotation (A), and that a curvature of the curved elongated portion (6), when the hook is in its lowest position (L), substantially follows a curvature of the inner surface (11) of the mixing container (2) along at least 50%, preferably at least 70%, of its length.

6. The arrangement (1) according to any one of the preceding claims, wherein at least 40%, preferably at least 50%, more preferably at least 60% of the mixing container inner surface (11) has the shape of an oblate spheroid.

7. The arrangement (1) according to claim 6, wherein a minor axis of the at least partly oblate spheroid substantially coincides with the rotation axis (A) of the hook (3).

8. The arrangement (1) according to claim 7, wherein the minor axis of the at least partly oblate spheroid extends between a substantially flat first inner surface portion (10'), extending substantially perpendicular to the axis of rotation (A), and an oppositely arranged second inner surface portion (12).

9. The arrangement (1) according to claim 8, wherein the second inner surface portion (12) is substantially flat, and further arranged substantially in parallel to the first substantially flat surface portion (10').

10. The arrangement (1) according to claim 8, wherein the second inner surface portion (12) comprises a protuberance (14) directed towards the first substantially flat inner surface portion (10').

11. The arrangement (1) according to claim 10, wherein the protuberance (14) is directed substantially along the axis of rotation (A), towards the attachment portion (7) of the hook (3).

12. The arrangement (1) according to claim 11, wherein the shape of the protuberance (14) is adapted to co-operate with the solid of revolution of the hook (3).

13. The arrangement (1) according to any one of the preceding claims, wherein the distal end (5) of the curved elongated portion (6) is directed in a third direction (T), and in that the third direction (T), when projected on the second, substantially horizontally arranged plane, forms an angle (β), larger than 0 degrees, with the second direction (S).

## Patentansprüche

1. Haushaltsgerät-Mischanordnung (1), die einen Mischbehälter (2) und einen Haken (3) mit einem proximalen Ende (4), einem distalen Ende (5) und einem gekrümmten länglichen Abschnitt (6), der sich zwischen dem proximalen Ende (4) und dem distalen Ende (5) erstreckt, aufweist, wobei das proximale Ende (4) einen Anbringungsabschnitt (7) aufweist, der an eine Antriebsanordnung (16) über ein Durchgangsloch (2') in einem ersten inneren Flächenabschnitt (10) des Mischbehälters (2) derart anbringbar ist, dass der Haken (3) um eine im Wesentlichen horizontale Drehachse (A) innerhalb des Mischbehälters (2) drehbar ist,
wobei der Haken (3) derart konfiguriert ist, dass, wenn er an der Antriebsanordnung (16) angebracht ist und sich in seiner untersten Position (L) befindet, sich der gekrümmte längliche Abschnitt (6) an seinem proximalen Ende (4) in eine erste Richtung (F) erstreckt, nach unten von der im Wesentlichen horizontalen Drehachse (A) und im Wesentlichen senkrecht dazu, im Wesentlichen parallel zu dem ersten inneren Flächenabschnitt (10) des Mischbehälters (2), und sich mindestens ein Teil des gekrümmten länglichen Abschnitts (6) in eine zweite Richtung (S) erstreckt, wobei ein Winkel (**α**) mit einer ersten Ebene (P) gebildet ist, die durch die erste Richtung (F) und die im Wesentlichen horizontale Drehachse (A) definiert ist, **dadurch gekennzeichnet, dass** der Haken (3), wenn er gedreht wird, einen abgeflachten sphäroidförmigen Drehkörper bildet, der im Wesentlichen einem Teil der inneren Fläche (11) des Mischbehälters (2) entspricht.

2. Anordnung (1) nach Anspruch 1, wobei der Winkel (**α**) in die Drehrichtung des Hakens positiv ist.

3. Anordnung (1) nach Anspruch 1, wobei der Winkel (**α**), wenn er auf eine zweite, im Wesentlichen horizontal angeordnete Ebene projiziert ist, in einem Bereich von 10-60 Grad, vorzugsweise 20-50 Grad, noch bevorzugter 30-40 Grad liegt.

4. Anordnung (1) nach einem der vorhergehenden Ansprüche, wobei eine Krümmung des gekrümmten länglichen Abschnitts (6), wenn sich der Haken in seiner untersten Position (L) befindet, im Wesentlichen einer Krümmung einer inneren Fläche (11) des Mischbehälters (2) entlang mindestens 50%, vorzugsweise mindestens 70% einer Länge des gekrümmten länglichen Abschnitts (6) folgt.

5. Anordnung (1) nach einem der Ansprüche 1-4, wobei mindestens 40%, vorzugsweise mindestens 50%, noch bevorzugter mindestens 60% der inneren Fläche (11) des Mischbehälters die Form eines Zylinders mit einer Zylinderachse hat, die im Wesentlichen parallel zu der Drehachse (A) ist, und dass eine Krümmung des gekrümmten länglichen Abschnitts (6), wenn sich der Haken in seiner untersten Position (L) befindet, im Wesentlichen einer Krümmung der inneren Fläche (11) des Mischbehälters (2) entlang mindestens 50%, vorzugsweise mindestens 70% seiner Länge folgt.

6. Anordnung (1) nach einem der vorhergehenden Ansprüche, wobei mindestens 40%, vorzugsweise mindestens 50%, noch bevorzugter mindestens 60% der inneren Fläche (11) des Mischbehälters die Form eines abgeflachten Sphäroids hat.

7. Anordnung (1) nach Anspruch 6, wobei eine Nebenachse des zumindest teilweise abgeflachten Sphäroids im Wesentlichen mit der Drehachse (A) des Hakens (3) übereinstimmt.

8. Anordnung (1) nach Anspruch 7, wobei sich die Nebenachse des zumindest teilweise abgeflachten Sphäroids zwischen einem im Wesentlichen flachen ersten inneren Flächenabschnitt (10'), der sich im Wesentlichen senkrecht zu der Drehachse (A) erstreckt, und einem gegenüberliegend angeordneten zweiten inneren Flächenabschnitt (12) erstreckt.

9. Anordnung (1) nach Anspruch 8, wobei der zweite innere Flächenabschnitt (12) im Wesentlichen flach und ferner im Wesentlichen parallel zu dem ersten im Wesentlichen flachen Flächenabschnitt (10') angeordnet ist.

10. Anordnung (1) nach Anspruch 8, wobei der zweite innere Flächenabschnitt (12) eine Ausstülpung (14) aufweist, die hin zu dem ersten im Wesentlichen flachen inneren Flächenabschnitt (10') gerichtet ist.

11. Anordnung (1) nach Anspruch 10, wobei die Ausstülpung (14) im Wesentlichen entlang der Drehachse (A) hin zu dem Anbringungsabschnitt (7) des Hakens (3) gerichtet ist.

12. Anordnung (1) nach Anspruch 11, wobei die Form der Ausstülpung (14) ausgelegt ist, um mit dem Drehkörper des Hakens (3) zusammenzuwirken.

13. Anordnung (1) nach einem der vorhergehenden Ansprüche, wobei das distale Ende (5) des gekrümmten länglichen Abschnitts (6) in eine dritte Richtung (T) gerichtet ist, und dass die dritte Richtung (T), wenn sie auf die zweite, im Wesentlichen horizontal angeordnete Ebene projiziert ist, einen Winkel (**β**), der größer ist als 0 Grad, mit der zweiten Richtung (S) bildet.

## Revendications

1. Dispositif de mélange d'appareil électroménager (1), comprenant un récipient de mélange (2) et un crochet (3) présentant une extrémité proximale (4), une extrémité distale (5) et une partie allongée courbe (6) qui s'étend entre l'extrémité proximale (4) et l'extrémité distale (5), l'extrémité proximale (4) comportant une partie de fixation (7) qui peut être attachée à un dispositif d'entraînement (16) par l'intermédiaire d'un trou traversant (2') dans une première partie de surface intérieure (10) du récipient de mélange (2) de telle sorte que le crochet (3) soit rotatif autour d'un axe de rotation sensiblement horizontal (A) à l'intérieur du récipient de mélange (2),
le crochet (3) est configuré de telle sorte que lorsqu'il est attaché au dispositif d'entraînement (16) et se trouve dans sa position la plus basse (L), la partie allongée courbe (6) à son extrémité proximale (4) s'étende dans une première direction (F), qui est orientée vers le bas à partir de l'axe de rotation sensiblement horizontal (A) et sensiblement perpendiculairement à celui-ci, sensiblement parallèlement à la première partie de surface intérieure (10) du récipient de mélange (2), et au moins une partie de la partie allongée courbe (6) s'étend dans une deuxième direction (S), formant un angle (**α**) avec un premier plan (P) défini par la première direction (F) et l'axe de rotation sensiblement horizontal (A),
**caractérisé en ce que** le crochet (3), lorsqu'il tourne, forme un solide de révolution en forme de sphéroïde aplati qui correspond sensiblement à une partie de la surface intérieure (11) du récipient de mélange (2).

2. Dispositif (1) selon la revendication 1, dans lequel l'angle (**α**) est positif dans le sens de rotation du crochet.

3. Dispositif (1) selon la revendication 1, dans lequel l'angle (**α**), lorsqu'il fait saillie sur un second plan agencé sensiblement horizontalement, est compris dans la gamme de 10 à 60 degrés, de préférence de 20 à 50 degrés, mieux encore de 30 à 40 degrés.

4. Dispositif (1) selon l'une quelconque des revendications précédentes, dans lequel une courbure de la partie allongée courbe (6), lorsque le crochet se trouve dans sa position la plus basse (L), suit sensiblement une courbure d'une surface intérieure (11) du récipient de mélange (2) le long d'au moins 50 %, de préférence d'au moins 70 %, d'une longueur de la partie allongée courbe (6).

5. Dispositif (1) selon l'une quelconque des revendications 1 à 4, dans lequel au moins 40 %, de préférence au moins 50 %, mieux encore au moins 60 % de la surface intérieure (11) du récipient de mélange ont la forme d'un cylindre qui présente un axe de cylindre sensiblement parallèle à l'axe de rotation (A), et une courbure de la partie allongée courbe (6), lorsque le crochet se trouve dans sa position la plus basse (L), suit sensiblement une courbure de la surface intérieure (11) du récipient de mélange (2) le long d'au moins 50 %, de préférence d'au moins 70%, de sa longueur.

6. Dispositif (1) selon l'une quelconque des revendications précédentes, dans lequel au moins 40 %, de préférence au moins 50 %, mieux encore au moins 60 % de la surface intérieure (11) du récipient de mélange ont la forme d'un sphéroïde aplati.

7. Dispositif (1) selon la revendication 6, dans lequel un axe mineur dudit sphéroïde au moins partiellement aplati coïncide sensiblement avec l'axe de rotation (A) du crochet (3).

8. Dispositif (1) selon la revendication 7, dans lequel l'axe mineur du sphéroïde au moins partiellement aplati s'étend entre une première partie de surface intérieure sensiblement plate (10'), qui s'étend sensiblement perpendiculairement à l'axe de rotation (A), et une seconde partie de surface intérieure (12) agencée en opposition.

9. Dispositif (1) selon la revendication 8, dans lequel la seconde partie de surface intérieure (12) est sensiblement plate, et est en outre agencée sensiblement parallèlement à la première partie de surface sensiblement plate (10').

10. Dispositif (1) selon la revendication 8, dans lequel la seconde partie de surface intérieure (12) comporte une protubérance (14) orientée en direction de la première partie de surface intérieure sensiblement plate (10').

11. Dispositif (1) selon la revendication 10, dans lequel la protubérance (14) est orientée sensiblement le long de l'axe de rotation (A), en direction de la partie de fixation (7) du crochet (3).

12. Dispositif (1) selon la revendication 11, dans lequel la forme de la protubérance (14) est adaptée de manière à coopérer avec le solide de révolution du crochet (3).

13. Dispositif (1) selon l'une quelconque des revendications précédentes, dans lequel l'extrémité distale (5) de la partie allongée courbe (6) est orientée dans une troisième direction (T), et en ce que la troisième direction (T), lorsqu'elle fait saillie sur le second plan agencé sensiblement horizontalement, forme un angle (β), supérieur à 0 degré, avec la deuxième direction (S).
